# EUROPÄISCHE PATENTSCHRIFT

(11) **EP 1 062 666 B1**
(45) Veröffentlichungstag und Bekanntmachung des Hinweises auf die Patenterteilung: **04.06.2003**
(21) Anmeldenummer: 99913111.3
(22) Anmeldetag: 10.03.1999
(51) Int. Cl.: G11B 33/04

(54) **SELBSTKLEBENDE KNOPFSCHEIBE UND DEREN ANWENDUNG**
SELF-ADHESIVE SPINDLE-SHAPED BUTTON DISK AND THE USE THEREOF
AXE DE ROTATION AUTOCOLLANT ET SON UTILISATION

(30) Priorität: 10.03.1998 DE 19810303; 13.03.1998 DE 19810966
(43) Veröffentlichungstag der Anmeldung: 27.12.2000
(73) Patentinhaber: Phonosound Musikproduktions GmbH, 82239 Alling (DE)
(72) Erfinder: FLIEGEL, Erwin, D-82239 Alling (DE)
(74) Vertreter: Söffge, Karen
(86) Internationale Anmeldenummer: DE9900653
(87) Internationale Veröffentlichungsnummer: WO99046773

(56) Entgegenhaltungen:
- WO-A-95/27286
- US-A- 5 332 089
- US-A- 5 533 614
- US-A- 5 685 424
- US-A- 5 857 575

## Beschreibung

Die vorliegende Erfindung befasst sich mit einer selbstklebenden Knopfscheibe und deren Anwendung, die dazu dient, scheibenförmige Informationsträger auf einer geeigneten Fläche lösbar zu befestigen, insbesondere sogenannte Compact Disks (CD) an ebenen Flächen.

Selbstklebende scheibenförmige Vorrichtung zum Aufkleben bzw. Befestigen auf oder an einer ebenen Fläche, um damit scheibenförmige Informationsträger zu etikettieren, sind im Stand der Technik bekannt. So ist beispielsweise der US 5,332,089 eine Verpackungstasche mit einem runden Halteelement zu entnehmen, das aus mehreren Schichten zusammengesetzt ist. Die Schichten bestehen aus einem federnd nachgiebigen Material, wie beispielsweise einem geschlossenzelligen polymeren Schaumstoff. Der geschlossenzellige, nachgiebige Schaumstoff ist auf beiden Deckflächen des zylinderförmigen Halteelements mit unterschiedlich festklebenden Klebern beschichtet, wovon der schwach klebende Kleber auf die Oberfläche des zu haltenden Deckels der Verpackungstasche einwirkt und ihn lösbar festhält, während der stark klebende Kleber permanent mit der Oberfläche der Grundplatte der Verpackungstasche unlösbar verbunden ist, so dass diese stark klebende Schicht, die das Halteelement permanent mit der Grundplatte verbindet, bereits bei der Herstellung der Verpackungstasche aufgebracht wird und anfänglich mit keiner Schutzfolie bedeckt ist, die die Klebeschicht vor Umwelteinflüssen schützt. Darüber hinaus ist die schwach klebende Schicht des Halteelements zunächst mit einer Schutzfolie bedeckt, die wahlweise bei Bedarf abgezogen werden kann oder nicht. Im abgezogenen Zustand der Folie von der schwach klebenden Schicht soll diese Klebeschicht auf die Oberfläche des Deckels der Verpackungsschachtel so einwirken, dass dieser geschlossen bleibt. Somit erfüllt die weniger festklebende Klebeschicht die Aufgabe, den Deckel geschlossen zu halten.

Als nachteilig an diesem nächstliegenden Stand der Technik ist es anzusehen, dass die Herstellung des Halteelements verhältnismäßig aufwendig ist und in der Handhabung zu kompliziert ist, damit der Endverbraucher das Halteelement bestimmungsgemäß anwendet.

Ferner ist der US 5,685,424 eine faltbare Verpackungstasche zu entnehmen, die aus mehreren Abschnitten besteht und durch vorbestimmte Faltkanten gemäß einer vorbestimmten Vorschrift zusammengelegt werden kann. Diese zusammenlegbare Falttasche weist auf dem mittleren Abschnitt ein Halteelement auf, das auf die ebene Fläche des Abschnitts mittig aufgeklebt wird. Das aufgeklebte Halteelement greift in das Zentralloch der aufzubewahrenden CD klemmend ein, so dass die CD auf der Oberfläche des Faltabschnitts gehalten wird. Das Halteelement selbst besteht aus einem Kunststoffteil, das entlang des Durchmessers eine Kerbe aufweist, durch die eine federnde und klemmende Wirkung erzielt wird. Der diesem Faltabschnitt gegenüber liegende Faltabschnitt weist in der Mitte eine runde Ausnehmung auf, die etwas größer ist als der Durchmesser des Halteelements und somit keine Klemmwirkung mit dem Halteelement entfaltet.

Ferner ist es im allgemeinen Stand der Technik bekannt, auf einem vorgestanzten Papierbogen genormter Größe Grafiken oder Beschriftungen mit Hilfe eines computergesteuerten Druckers auf die Oberfläche des Blattes zu bringen, wie beispielsweise bei CD-Etiketten, die anschließend mit Hilfe einer besonderen Zentrierhilfe auf eine Seite der CD zu kleben sind. Aus der WO 95/27286 ist ferner eine Verpackungsschachtel und aus der US 5,857,575 ein Halter für Speichermedien bekannt.

Ausgehend vom oben genannten Stand der Technik liegt der Erfindung die Aufgabe zugrunde, Mittel zur sicheren Positionierung eines scheibenförmigen Informationsträgers bereit zu stellen, die den scheibenförmigen Informationsträger in seiner einmal gegebenen Position festhält und sowohl dem scheibenförmigen Informationsträger als auch dem darüber liegenden Deckel einer Verpackungstasche einen leicht lösbaren Halt zu geben.

Diese Aufgabe wird erfindungsgemäß mit den Merkmalen des Anspruchs 1 gelöst.

Die Erfindung besteht aus einer selbstklebenden Knopfscheibe, bestehend aus mehreren Lagen, wobei eine Lage aus einem geschlossenzelligen Schaumstoff besteht, deren Durchmesser (D1) zwischen 15,1 mm und 15,3 mm und die Höhe zwischen 1,5 mm und 3,5 mm liegt, zur lösbaren Befestigung scheibenförmiger Informationsträger mit einem Mitteldurchbruch an ebenen Flächen, wobei der Durchmesser (D1) in den Mitteldurchbruch passt und ist dadurch gekennzeichnet, dass die Lage aus einem Moosgummi besteht, und nur eine Fläche der Lage aus Moosgummi mit einem lösbaren Kleber beschichtet ist.

Das erfindungsgemäße Verfahren zur Herstellung einzelner individueller Verpackungstaschen für scheibenförmige Informationsträger mit einer Knopfscheibe ist dadurch gekennzeichnet, dass die auf einem Blatt genormter Größe vorgestanzte Oberfläche der Abwicklung der Verpackungstasche mit einem computergesteuerten Drucker individuell bedruckt wird und mindestens eine Knopfscheibe wie oben bzw. in Anspruch 1 definiert auf die Grundplatte der Verpackungstasche gesetzt wird, die mit einer Ausnehmung des gegenüber liegenden Faltteils der Verpackungstasche klemmend im Eingriff steht.

Die selbstklebende Knopfscheibe ist hauptsächlich dafür zu verwenden, um Compact Disks mit einem Handgriff an einer beliebigen Fläche lösbar zu befestigen, ohne dass dabei dem Befestigungsvorgang große Beachtung und Geschicklichkeit gewidmet wird.

In vorteilhafter Weise weist die selbstklebende Knopfscheibe ein Teil auf, dessen Form ein beliebiger polygoner Zug ist, wobei vorzugsweise ein Viereck bzw. ein Kreis zu wählen ist.

Ferner ist es vorteilhaft, die erfindungsgemäße Knopfscheibe aus mindestens zwei Schichten zu fertigen, wovon eine Schicht eine Klebeschicht ist und die andere Schicht aus einem nachgiebigen Material besteht. Dabei kann die Klebeschicht kontinuierlich oder diskontinuierlich auf der dafür vorgesehenen Fläche verteilt sein. Vorteilhaft ist es auch, wenn für die Klebeschicht ein Klebstoff verwendet wird, der nach dem Lösen der Knopfscheibe auf der geeigneten Fläche keine Klebstoffspuren hinterläßt.

Dabei wird die zweite Schicht aus einem sogenannten Moosgummi gebildet, das einerseits verhältnismäßig weich ist und andererseits eine Klemmwirkung an dem Mitteldurchbruch des scheibenförmigen Informationsträgers entfaltet.

Eine andere vorteilhafte Ausbildung der zweiten Schicht kann darin gesehen werden, daß diese Schicht aus Pappe gefertigt ist und die Klebeschicht mit der Pappe in unmittelbarer Verbindung steht. Wichtig für die vorliegende Erfindung ist es jedenfalls, daß die zweite Schicht aus einem nachgiebigen Material besteht. Das nachgiebige Material kann vorteilhaft auch dadurch bewirkt werden, daß lamellenartige Kunststoffteile kreisförmig zusammengefügt werden und somit federnd mit dem Mitteldurchbruch der Compact Disk im Eingriff stehen. Für den Fall, daß der scheibenförmige Informationsträger eine normale Compact Disk ist, beträgt der Durchmesser D1 = 15 mm + 0,1 bis 0,3 mm, wobei die Maßzugabe Material abhängig ist, d.h. bei weichem Material ist die Maßzugabe größer als bei härterem Material.

Vorteilhaft und erfindungswesentlich ist es, daß die Gesamthöhe (H) der selbstklebenden Knopfscheibe etwa 1,5 bis 3 mm beträgt. Aufgrund dieser flachen Ausführungsform weist die erfindungsgemäße selbstklebende Knopfscheibe ein breites Verwendungsspektrum auf z.B. Verpackungstaschen für CD.

Derartige Verpackungstaschen sind im Stand der Technik bekannt. Die bekannten Verpackungstaschen sind in der Regel aus einem faltbaren Material, wie beispielsweise Pappe, hergestellt. Die Abwicklung der Verpackungstasche ist hierbei entweder bereits ausgestanzt oder auf einem beliebigen Bogen vorgestanzt, so daß die Abwicklung der Verpackungstasche herausgetrennt werden muß und anschließend zusammengefaltet wird. Bei diesen verhältnismäßig einfachen und kostengünstigen Verpackungstaschen für scheibenförmige Informationsträger, insbesondere für CDs, wird als nachteilig empfunden, daß die scheibenförmigen Informationsträger keine sichere Position in der Verpackungstasche haben, so daß sie entweder herausrutschen oder infolge leichter Bewegungen verkratzt werden.

Ein Verfahren zur Herstellung der Verpackungstasche, vorzugsweise aus Pappe, zum verrückungsfesten Verpacken von scheibenförmigen Informationsträgern, vorzugsweise Compact Disks, besteht aus folgenden Verfahrensschritten:
- Konfiguration des gesamten Druckbildes auf dem Bildschirm eines Computers;
- Einlegen eines bestimmten vorbehandelten Blattes genormter Größe, auf dem die Abwicklung der Verpackungstasche mit mindestens einer Ausnehmung in mindestens einer Seite der Verpacküngstasche vorgestanzt ist;
- Bedrucken des vorbehandelten normgerechten Blattes mit dem im Computer konfigurierten Druckbild mittels eines Druckers;
- Heraustrennen der Abwicklung aus dem vorgestanzten Blatt;
- Zusammenfalten der zu erstellenden Verpackungstasche; und
- Aufkleben mindestens einer flachen Knopfscheibe gemäß der Erfindung bestimmten Durchmessers, vorzugsweise 15 mm + 0,1 bis 0,3 mm, auf die der einen Ausnehmung in der mindestens einen Seite gegenüberliegenden Seite.

Als wesentlicher Vorteil dieser Ausführungsform einer ansonsten bekannten Verpackungstasche für CDs wird empfunden, daß erfindungsgemäß eine Einrichtung zur Fixierung des scheibenförmigen Informationsträgers vorgesehen ist, die mit kostengünstigen und einfachen Mitteln erzielt werden kann. Die erfindungsgemäß vorgesehene Positionssicherungs-Einrichtung besteht vorteilhaft aus einer flachen Knopfscheibe aus einem nachgiebigen Material, wie beispielsweise Moosgummi, auf deren einen Seite eine Klebeschicht aufgebracht ist, die die Positionssicherungs-Einrichtung im Prinzip auf jeder glatten Fläche mühelos befestigt.

Ferner ist es vorteilhaft, in mindestens einer Seite der erfindungsgemäßen Verpackungstasche eine mittige Ausnehmung vorzusehen, die in etwa in Höhe des Zentrallochs des scheibenförmigen Informationsträgers liegt. Die dieser Seite gegenüberliegende Seite sollte in diesem Ausführungsbeispiel keine Ausnehmung aufweisen, da genau an dieser Stelle die Positionssicherungs-Einrichtung festgeklebt wird. Die Positionssicherungs-Einrichtung ist vorteilhaft etwa 1,5 bis 3 mm dick, so daß sie im wesentlichen die Stärke eines normalen scheibenförmigen Informationsträgers annimmt.

Eine weitere vorteilhafte Ausbildungsform der erfindungsgemäßen Verpackungstasche ist darin zu sehen, daß beide Seiten der Verpackungstasche eine mittige Ausnehmung aufweisen, und zwischen den beiden Seiten eine lose Einlage bzw. ein loses Blatt Papier gelegt wird, das beidseitig an der vorgeschriebenen Stelle der Ausnehmungen in den Seiten der Verpackungstasche mit einer Positionssicherungs-Einrichtung versehen ist. Somit ist die Möglichkeit eröffnet, zwei scheibenförmige Informationsträger in einer einfachen Verpackungstasche sicher aufzubewahren, ohne fürchten zu müssen, daß beispielsweise die Compact Disks ständig hin und her rutschen oder gar herausfallen können.

Vorteilhaft werden die oberen und unteren Kanten der Verpackungstasche durch Faltung mindestens eines Seitenstreifens verstärkt. Dabei ist mindestens eine Kante vorteilhaft mit einer Aussparung versehen, die es ermöglicht, den scheibenförmigen Informationsträger leicht herauszunehmen.

Ein weiteres Ausführungsbeispiel der vorliegenden Erfindung liegt darin, die Abwicklung der Verpackungstasche dreiteilig zu gestalten, wobei die beiden äußeren Abschnitte jeweils eine mittige Ausnehmung aufweisen und der mittlere Abschnitt auf beiden Seiten jeweils eine Positionssicherungs-Einrichtung aufnimmt, die jeweils eine Compact Disk auf jeder Seite lösbar befestigt.

Ein weiteres Ausführungsbeispiel ist vorteilhaft darin zu sehen, daß kreuzförmig Streifen angeordnet sind, die jeweils in verschiedene Abschnitte so unterteilt sind, daß fünf Teilabschnitte entstehen, die mindestens eine Positionssicherungs-Einrichtung aufweisen.

Weitere erfindungswesentliche Merkmale sind den Unteransprüchen zu entnehmen.

Im nun folgenden wird die Erfindung anhand von Zeichnungen im Detail näher erläutert. Es zeigt:
- Fig. 1: eine schematische Explosionsdarstellung der selbstklebenden Knopfscheibe mit dem erfindungsgemäßen Teil (1) unterhalb eines scheibenförmigen Informationsträgers (6);
- Fig. 2: die Draufsicht verschiedener erfindungsgemäßer möglicher Teile (1), deren Ecken (9, 10, 11) von einem einhüllenden Kreis (2) umschlossen sind;
- Fig. 3: die Seitenansicht eines Ausführungsbeispiels einer selbstklebenden Knopfscheibe, bestehend aus drei Schichten (12, 13, 14);
- Fig. 4: die Seitenansicht eines Anwendungsbeispiels der erfindungsgemäßen selbstklebenden Knopfscheibe auf einer ebenen Fläche (15);
- Fig. 5: die Seitenansicht eines weiteren Ausführungsbeispiels einer erfindungsgemäßen Knopfscheibe, deren Klemmschicht (12) aus kreisförmig angeordneten Lamellen (18) besteht.
- Fig. 6: ein vorbehandeltes normgerechtes Blatt (1), in das die Abwicklung (2) der erfindungsgemäßen Verpackungstasche vorgestanzt ist;
- Fig. 7: die Seitenansicht eines Ausführungsbeispiels einer Verpackungstasche mit drei Abschnitten (13, 14, 15) mit zwei Positionssicherungs-Einrichtungen (9, 9');
- Fig. 8: die Seitenansicht einer losen Einlage (18) mit zwei Positionssicherungs-Einrichtungen (9, 9') auf beiden Seiten (19, 19') der Einlage (18);
- Fig. 9: die Abwicklung (2') einer fünfteiligen Verpackungstasche, bei der jeder Abschnitt (21, 22, 23, 24, 25) eine Positionssicherungs-Einrichtung (9) aufweist.

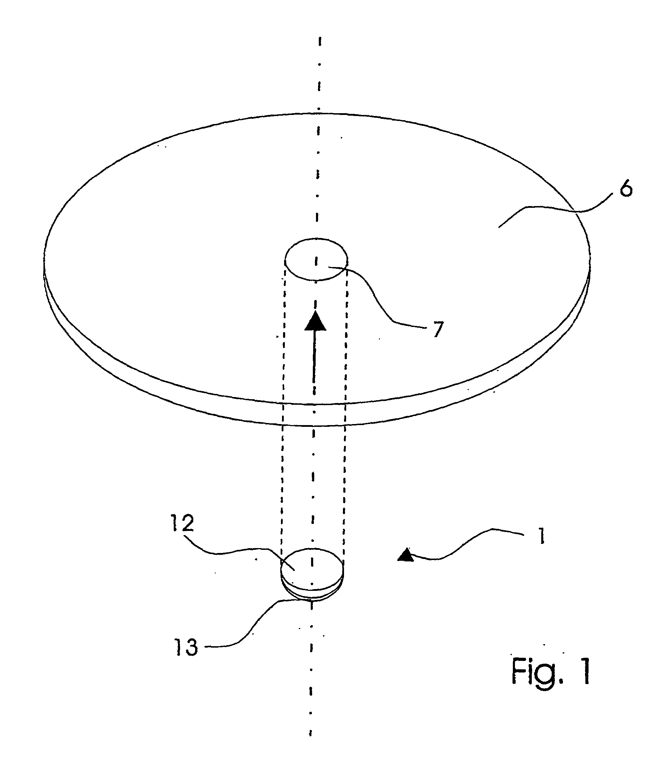

Die Fig. 1 zeigt eine schematische Explosionsdarstellung, in der die erfindungsgemäße selbstklebende Knopfscheibe unterhalb eines scheibenförmigen Informationsträgers 6 angeordnet ist. Die erfindungsgemäße Knopfscheibe besteht aus mindestens zwei Schichten, wovon die eine Schicht 12 ein nachgiebiges Material ist, das die Klemmwirkung entfaltet, und die andere Schicht 13 die Klebeschicht ist. Die Klebeschicht kann entweder ein geeigneter Klebstoff sein, oder jede beliebige Art eines sogenannten Klettverschlusses. Wichtig ist lediglich, daß die Häftschicht 13 bei Berührung mit einer vorgesehenen Fläche eine Haftung bewirkt. Oberhalb der Knopfscheibe 1 ist der scheibenförmige Informationsträger 6 angeordnet, der ein Zentralloch 7 aufweist, durch das die Schicht 12, bzw. das Teil 1 geführt wird. Der Durchmesser des einhüllenden Kreises der Schicht 12 ist so zu wählen, daß er geringfügig größer ist als der Durchmesser des Zentralloches 7. Die Maßzugabe des Durchmessers beträgt etwa 0,1 bis 0,3 mm. Infolge des nachgiebigen Materials der Schicht 12 wird somit eine lösbare Befestigung des scheibenförmigen Informationsträgers 6 bewirkt.

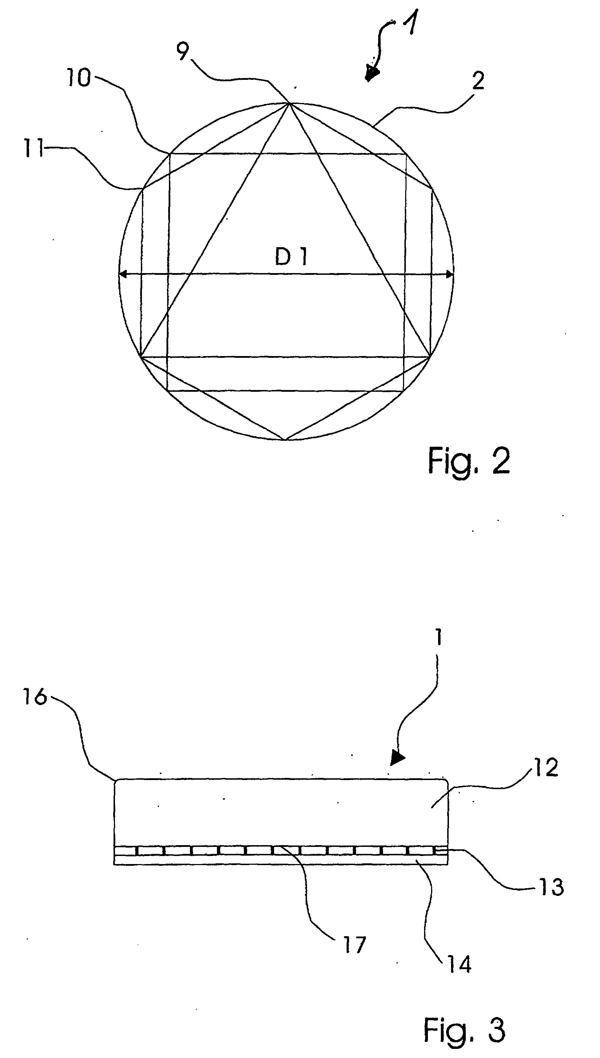

In Fig. 2 ist die Draufsicht verschiedener Formen des erfindungsgemäßen Klemmteils 1 der Knopfscheibe gezeigt. Das Klemmteil 1 kann jede polygone Form annehmen, wie beispielsweise ein Dreieck 9, ein Viereck 10, oder ein Sechseck 11. Eine bevorzugte Ausführungsform stellt die Kreisscheibe 2 dar, deren Durchmesser D1 dem einhüllenden Kreis der Ecken 9, 10, 11 der Vielecke entspricht. Bei den Vielecken steht der Rand des Mitteldurchbruchs 7 der Compact Disk 6 mit den Ecken 9, 10, 11 der Vielecke im Eingriff.

Die Fig. 3 zeigt die Seitenansicht eines Ausführungsbeispiels einer selbstklebenden flachen Knopfscheibe 1. In dieser Darstellung sind drei Schichten 12, 13, 14 ersichtlich. Die obere Schicht 12 besteht aus einem nachgiebigen Material, das ein sogenanntes Moosgummi ist. Die Fläche 17 ist für die Aufnahme einer Klebeschicht 13 vorgesehen, wobei die Klebeschicht 13 kontinuierlich oder diskontinuierlich über die gesamte dafür vorgesehene Fläche verteilt ist. Die Klebeschicht selbst ist ein geeigneter Silicon-Klebstoff, der beim Lösen der Klebeschicht auf einer ebenen Fläche keine Spuren hinterläßt. Eine andere, hier nicht näher beschriebene Schicht 13 besteht aus dem Gegenstück eines sogenannten Klettverschlusses. Für den Fall, daß die Schicht 13.ein Klebstoff ist, ist diese mit einer Schutzfolie 14 bedeckt, damit der Klebstoff nicht verschmutzt und dadurch seine Wirkung verliert. Die Ecken 16 der nachgiebigen Schicht 12 sind leicht gerundet, um ein besseres Überstreifen des Zentralloches 7 der Compact Disk 6 zu ermöglichen.

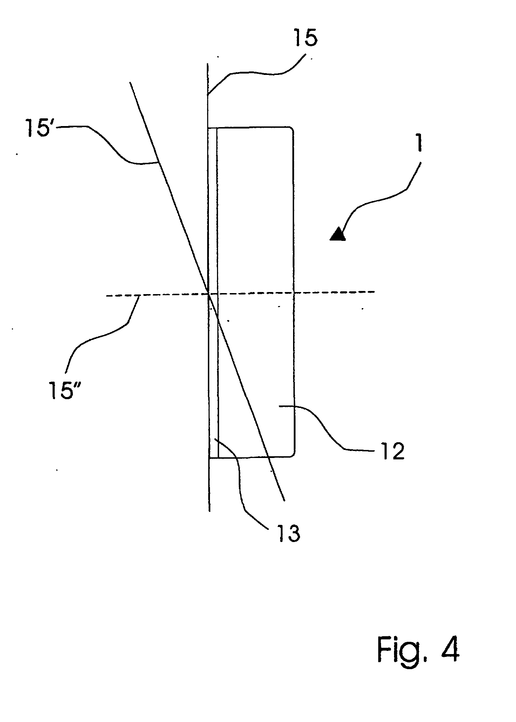

In Fig. 4 wird gezeigt, wie die erfindungsgemäße selbstklebende Knopfscheibe auf einer verhältnismäßig ebenen Fläche 15 aufgeklebt ist. Dabei ist es gleichgültig, welche Lage die Fläche 15 einnimmt. Die verschiedenen Lagen der Fläche sind durch die gestrichelten Linien 15' und 15" angedeutet. Eine bevorzugte Lage der Fläche 15 ist in der Vertikalen zu sehen, da es in der Regel sinnvoll und platzsparend ist, eine oder eine Vielzahl von Compact Disks an einer Wand lösbar zu befestigen.

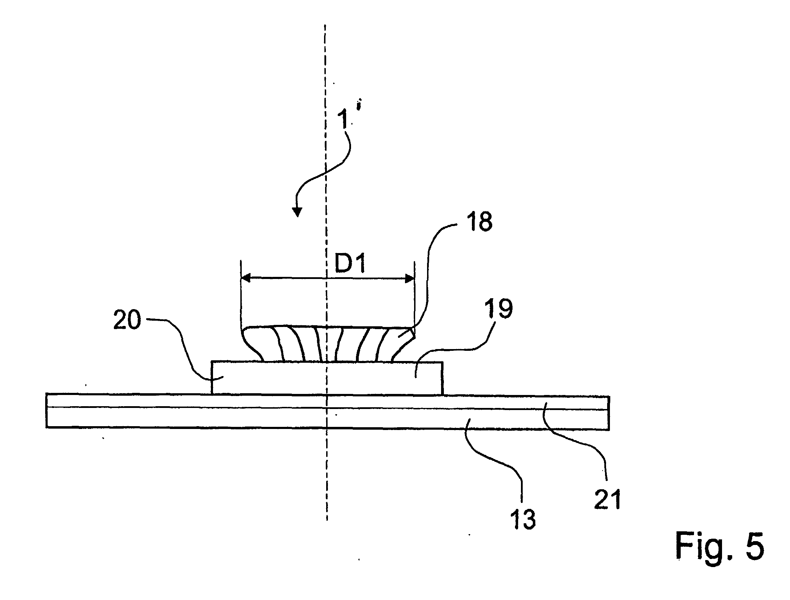

Die Fig. 5 zeigt ein weiteres Ausführungsbeispiel der erfindungsgemäßen Knopfscheibe. Auf einem Sockel 19 befinden sich eine Vielzahl von Lamellen 18, die kreisförmig angeordnet sind. Der Durchmesser D1 beträgt für den Normalfall einer Compact Disk 15 mm + 0,1 bis 0,3 mm. Das Material der gesamten Knopfscheibe besteht aus Kunststoff. Infolge der lamellenförmigen Anordnung der Teile 18 wird eine Federwirkung hervorgerufen. Der Sockel 19, auf dem die Lamellen 18 sitzen, kann mehrstufig ausgebildet sein, weist jedoch mindestens eine Stufe 20 auf, auf der eine seite der CD aufliegt. Dieses Ausführungsbeispiel weist eine weitere flache Scheibe 21 auf, deren untere Fläche mit einer Klebeschicht 13 versehen ist.

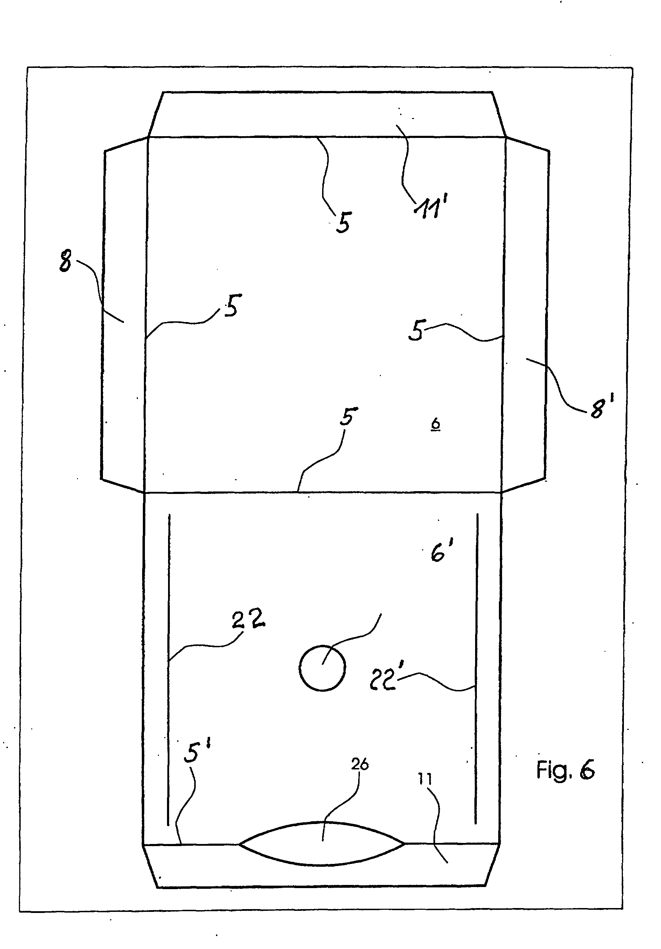

Fig. 6 zeigt die Draufsicht eines normgerechten (DIN A 4) Blattes 1; das eine Abwicklung 2 enthält, deren Konturen mittels einer Mikroperforation vorgestanzt sind. Das Blatt 1 ist im vorliegenden Fall mehrschichtig und besteht aus zwei Schichten, wovon eine Schicht das Material darstellt, aus dem die Verpackungstasche gefertigt bzw. gefaltet werden soll. Darüber befindet sich eine Abdeckfolie, die eventuelle Klebschichten auf den Seitenrändern 8, 8' schützt. In der Mitte eines Abschnitts 6 ist eine kreisrunde Ausnehmung 4 angeordnet, deren Durchmesser geringfügig größer als das Zentralloch einer normalen Compact Disk ist. Im Abschnitt 6 sind seitlich zwei Schlitze 22, 22' eingestanzt, die dazu dienen, die Ränder 8, 8' aufzunehmen, wenn keine Klebungen gewünscht werden. Nach dem Heraustrennen der Abwicklung aus dem normgerechten Blatt sind Faltungen an den Faltlinien 5 vorzunehmen. Sofern die Seitenränder 8, 8' eine Klebeschicht enthalten, werden die Seitenränder mit der gegenüberliegenden Seite 6' der Verpackungstasche verklebt. Im Anschluß daran ist durch die Ausnehmung 4 die Knopfscheibe 1 so zu führen, daß die Klebschicht der flachen Knopfscheibe 1 mit der einen Seite 6 in Berührung kommt. Nach Aufkleben der flachen Knopfscheibe 1 auf der Innenseite der Seite 6 kann die einzulegende Compact Disk eingeschoben werden und das Zentralloch der CD mit der flachen Knopfscheibe in Eingriff gebracht werden. Somit erhält die CD mit einfachen Mitteln eine Positionssicherung, die ein Verrutschen des scheibenförmigen Informationsträgers verhindert. Die obere Kante der Verpackungstasche wird durch eine Faltung an den Faltkanten 5 gebildet, wobei die Seitenstreifen 23, 23' auf die Innenfläche der Seite 6 bzw. der Seite 6 geklebt wird. Mindestens eine Faltkante 5 ist vorteilhaft durch eine Aussparung 26 unterbrochen, die im vorliegenden Fall annähernd oval ausgebildet ist.

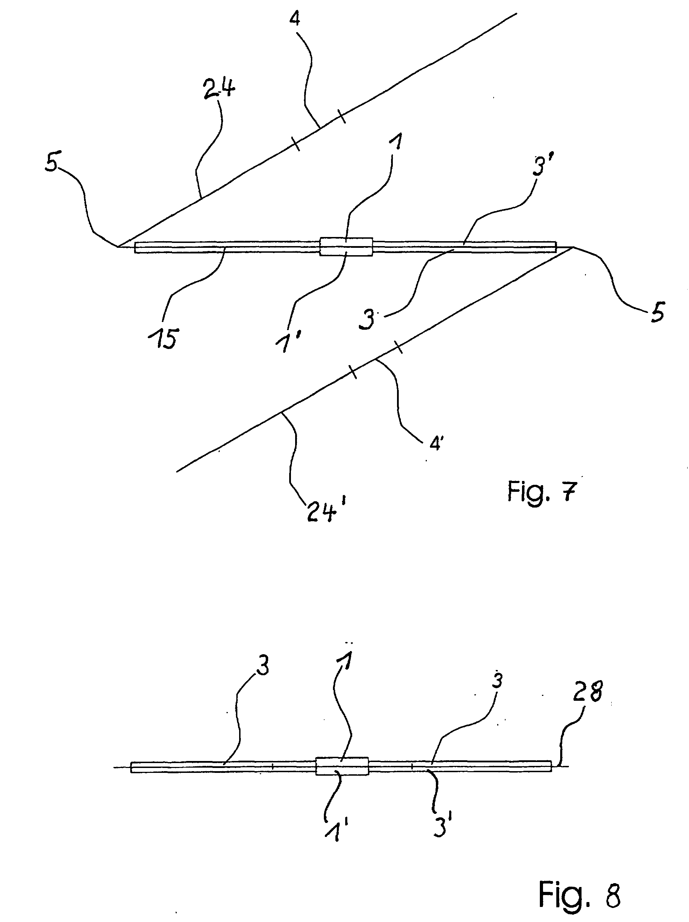

In Fig. 7 ist ein weiteres Ausführungsbeispiel einer erfindungsgemäßen Verpackungstasche in Seitenansicht schematisch dargestellt. Die Abwicklung besteht in diesem Ausführungsbeispiel aus drei Abschnitten 24, 24', 15 und kann zwei scheibenförmige Informationsträger 1, 1' aufnehmen. Die einzelnen Abschnitte werden an den Faltkanten 5 zick-zack-förmig gefaltet, so daß zwei getrennte Taschen entstehen. Die beiden äußeren Abschnitte der Abwicklung weisen jeweils eine Ausnehmung 4, 4' auf, durch die die Positionssicherungs-Einrichtung 1 bzw. 1' geführt und auf die der jeweiligen Seite gegenüberliegende Seite des mittleren Abschnitts 14 geklebt wird. Weitere Einzelheiten einer derartigen Verpackungstasche werden an dieser Stelle nicht näher erläutert, da sie a.O. im Detail beschrieben wurden.

In Fig. 8 ist die Seitenansicht einer Einlage 28 schematisch dargestellt. Die Einlage 28 weist in ihrer Draufsicht in etwa die Maße der Innenabmessungen der Verpackungstasche auf, in die die Einlage 28 hineingeschoben wird. Etwa in der Mitte der Einlage 28 sind beidseitig jeweils eine Fläche vorgesehen, auf die jeweils eine Positionssicherungs-Einrichtung 1 1' aufgeklebt wird. Die vorgegebenen Flächen können eine zusätzliche flache glatte Scheibe sein, die auf die Einlage 28 geklebt wird. Im einfachsten Falle ist lediglich ein Kreis zur Markierung der Flächen vorgesehen.

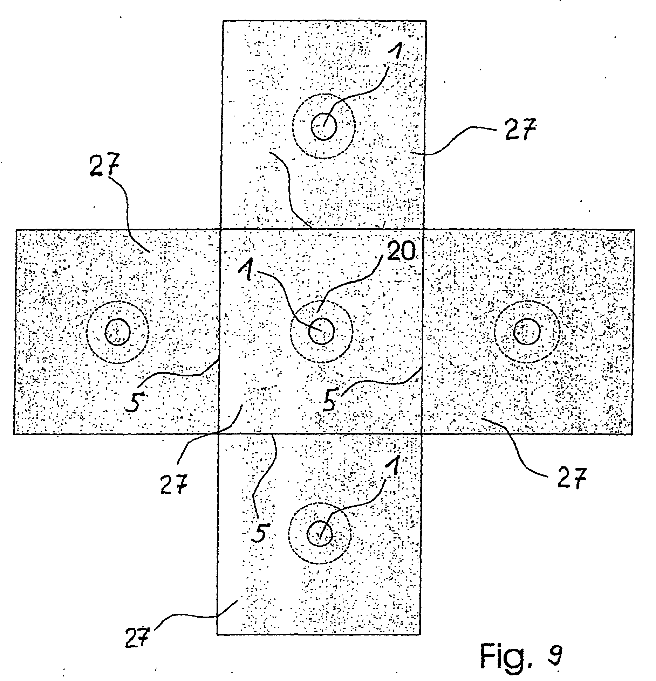

In Fig. 9 ist ein weiteres Ausführungsbeispiel einer erfindungsgemäßen Abwicklung dargestellt, die fünf Abschnitte 27 aufweist. Jeweils etwa in der Mitte kann mindestens eine Positionssicherungs-Einrichtung 1 aufgebracht werden, die mit jeweils einem scheibenförmigen Informationsträger 3 im Eingriff steht. Die einzelnen Abschnitte entstehen dadurch, daß die Abschnitte jeweils an den Faltkanten 5 abgekantet werden, um dann übereinandergelegt werden zu können. Die Einzelheiten der Faltvorschriften bzw. der Ausführungsform der Abwicklung sind an dieser Stelle nicht maßgebend. Äuch ist es nicht erforderlich, daß jeder Abschnitt 27 eine Positionssicherungs-Einrichtung 1 aufweist. Die Anzahl ist anwendungsabhängig.

Die vorliegende Erfindung wendet sich primär an Endverbraucher, die eine individuelle Bedruckung des Covers ihrer scheibenförmigen Informationsträger, wie beispielsweise einer CD, wünschen. Das von einem herkömmlichen Drucker zu erstellende Bild wird auf dem Bildschirm eines herkömmlichen Computers konfiguriert und dann auf den Drucker gegeben. Daher ist es empfehlenswert, normgerechte Blätter zu verwenden, um nicht bei jedem Cover neu zu formatieren.

## Patentansprüche

1. Selbstklebende Knopfscheibe bestehend aus mehreren Lagen, wobei eine erste Läge (12) aus einem geschlossenzelligen Schaumstoff besteht, und der Durchmesser der Knopfscheibe (D1) zwischen 15,1 mm und 15,3 mm und die Höhe dieser ersten Lage zwischen 1,5 mm und 3,5 mm liegt, zur lösbaren Befestigung scheibenförmiger Informationsträger (3) mit einem Mitteldurchbruch (7) an ebenen Flächen, wobei der Durchmesser der Knopfscheibe (D1) in den Mitteldurchbruch (7) passt, **dadurch gekennzeichnet, dass**
- die erste Lage (12) aus einem Moosgummi besteht; und
- nur eine Fläche (17) der ersten Lage (12) mit einem lösbaren Kleber (13) beschichtet ist.

2. Knopfscheibe nach Anspruch 1, **dadurch gekennzeichnet, dass** sie eine beliebige polygone Form aufweist.

3. Knopfscheibe nach Anspruch 1 oder 2, **dadurch gekennzeichnet, dass** sie kreisrund oder dreieckig oder viereckig oder sechseckig ist.

4. Knopfscheibe nach Anspruch 1, **dadurch gekennzeichnet, dass** sie aus mindestens zwei Schichten besteht, wovon eine Schicht eine Klebeschicht (13) ist und die andere Schicht (12) aus einem nachgiebigen Material besteht.

5. Knopfscheibe nach Anspruch 1 oder 4, **dadurch gekennzeichnet, dass** die Klebeschicht (13) kontinuierlich über die gesamte dafür vorgesehene Fläche (17) verteilt ist oder diskontinuierlich über die gesamte Fläche (17) verteilt ist.

6. Knopfscheibe nach Anspruch 4, **dadurch gekennzeichnet, dass** das nachgiebige Material (12) Pappe ist.

7. Knopfscheibe nach Anspruch 1 oder 2, **dadurch gekennzeichnet, dass** die Maßzugabe des Durchmessers (D1) des einhüllenden Kreises (2) materialabhängig ist.

8. Verfahren zur Herstellung einzelner individueller Verpackungstaschen für scheibenförmige Informationsträger mit einer Knopfscheibe (1), **dadurch gekennzeichnet, dass** die auf einem Blatt genormter Größe vorgestanzte Oberfläche der Abwicklung der Verpackungstasche mit einem computergesteuerten Drucker individuell bedruckt wird und mindestens eine Knopfscheibe (1) nach Anspruch 1 auf die Grundplatte (6,15) der Verpackungstasche gesetzt wird, die mit einer Ausnehmung (4, 4') des gegenüberliegenden Faltteils (6', 24, 24') der Verpackungstasche klemmend im Eingriff steht.

9. Verfahren nach Anspruch 8, **gekennzeichnet durch** folgende Verfahrensschritte:
- Konfiguration des gesamten Druckbildes auf dem Bildschirm eines Computers;
- Einlegen eines bestimmten vorbehandelten Blattes genormter Größe, auf dem die Abwicklung der Verpackungstasche vorgestanzt ist;
- Bedrucken des vorbehandelten normgerechten Blattes mit dem im Computer konfigurierten Druckbild mittels eines Druckers;
- Heraustrennen der Abwicklung aus dem vorgestanzten Blatt; und
- Zusammenfalten der fertigen Verpackungstasche.

10. Verfahren nach Anspruch 8, **gekennzeichnet durch** folgende Verfahrensschritte:
- Konfiguration des gesamten Druckbildes auf dem Bildschirm eines Computers;
- Einlegen eines bestimmten vorbehandelten Blattes genormter Größe, auf dem die Abwicklung der Verpackungstasche mit mindestens einer Ausnehmung (4) in mindestens einer Seite (6') der Verpackungstasche vorgestanzt ist;
- Bedrucken des vorbehandelten normgerechten Blattes mit dem im Computer konfigurierten Druckbild mittels eines Druckers;
- Heraustrennen der Abwicklung aus dem vorgestanzten Blatt;
- Zusammenfalten der fertigen Verpackungstasche; und
- Aufkleben mindestens einer flachen Knopfscheibe (1) nach Anspruch 1 auf die der einen Ausnehmung (4) in der mindestens einen Seite (6, 24') gegenüberliegenden Seite (6',15).

11. Verfahren nach Anspruch 8, **dadurch gekennzeichnet, dass**
- die ungefaltete Verpackungstasche (Abwicklung) auf einem Blatt genormter Größe vorgestanzt wird und mit einem computergesteuerten Drucker bedruckt wird; und
- mindestens eine Seite (6, 24, 24') der Verpackungstasche eine vorzugsweise runde Ausnehmung (4) aufweist, durch die die flache Knopfscheibe (1) nach Anspruch 1 geführt wird.

12. Verfahren nach Anspruch 8, **dadurch gekennzeichnet, dass** das vorgestanzte normgerechte Blatt auf den Seitenrändern (8, 8') eine Klebeschicht aufweist.

13. Verfahren nach Anspruch 12, **dadurch gekennzeichnet, dass** die Seitenränder (8, 8', 11) im gefalteten Zustand in einen vorgestanzten Schlitz (22, 22') geschachtelt werden.

14. Verfahren nach einem der Ansprüche 8 bis 13, **dadurch gekennzeichnet, dass** die Seitenränder (11, 11') an den Faltkanten (5') gefaltet und an den Abschnitten (6, 6') bzw. (24, 24') als Randverstärkung festgeklebt werden.

15. Verfahren nach einem der Ansprüche 8 bis 19, **dadurch gekennzeichnet, dass** mindestens eine Faltkante (5) in der Mitte durch eine Aussparung (26) unterbrochen ist.

16. Verfahren nach einem der Ansprüche 8 bis 15, **dadurch gekennzeichnet, dass** die Abwicklung der Verpackungstasche drei Abschnitte (24, 24', 15) aufweist, wovon die beiden äußeren Abschnitte (24, 24') jeweils eine Ausnehmung (4, 4') aufweisen.

17. Verfahren nach einem der Ansprüche 8 bis 16, **dadurch gekennzeichnet, dass** der mittlere Abschnitt (15) auf beiden Seiten eine Knopfscheibe (1, 1') nach Anspruch 1 aufweist.

18. Verfahren nach einem der Ansprüche 8 bis 17, **dadurch gekennzeichnet, dass** die vorgestanzte Abwicklung fünf Abschnitte aufweist, deren eine Seite und/oder beide Seiten mit einer Positionssicherungs-Einrichtung (1) versehen ist/sind.

## Claims

1. Self-adhesive button disk consisting of a plurality of layers, where a first layer (12) consists of a closed-cell foam, and the diameter (D1) of the self-adhesive button disk is between 15,1 mm and 15,3 mm and the height of this first layer is between 1,5 mm and 3,5 mm in a detachable manner for disk-shaped information carriers (3) with a breakthrough (7) on flat surfaces, and where the diameter (D1) of the button disk fits in the breakthrough (7), **characterized in that**
- the first layer (12) is a moos rubber material; and
- only one surface (17) of the first layer (12) is coated with a detachable adhesive layer (13).

2. Button disk according to claim 1, **characterized in that** said button disk shows any desired polygonal shape.

3. Button disk according to claim 1, **characterized in that** said button disk is circular or triangular or quadrangular or hexagonal.

4. Button disk according to claim 1, **characterized in that** said button disk consists of at least two layers, whereof one layer is an adhesive layer (13) and the other layer (12) consists of a yielding material.

5. Button disk according to claim 1 or 4, **characterized in that** said button disk the adhesive layer (13) is distributed continuously over the entire surface (17) intended therefor or is distributed discontinuously over the entire surface (17).

6. Button disk according to claim 4, **characterized in that** the yielding material (12) is a cardboard.

7. Button disk according to claim 1 or 2, **characterized in that** the diameter (D1) of the covering circle (2) depend upon the material.

8. Method of producing individual packaging cases for disk-shaped information carriers (3) with a button disk, **characterized in that** a sheet with a standardized size and a prepunched surface of the layout of the packaging case is individually imprinted by means of a computer-controlled printer, and at least one button-disk (1), according to claim 1, is set on the basis plate (6, 15) of the packaging case, where said button disk is secured in a clamping manner in a recess (4, 4') of the opposite folding part (6', 24, 24') of the packaging case.

9. Method according to claim 8, **characterized by** the following steps:
- Configuration of the entire printed image on the video screen of a computer;
- insertion of defined pretreated sheet of a standardized size, on which the layout of the packaging case has been prepunched;
- imprinting of the pretreated standardized sheet with the printed image configured in the computer by means of a printer;
- separation of the layout from the prepunched sheet; and
- folding the finished packaging case together.

10. Method according to claim 8, **characterized by** the following steps:
- Configuration of the entire printed image on the video screen of a computer;
- insertion of defined pretreated sheet of a standardized size, on which the layout of the packaging case with at least one recess (4) in at least one side (6') of the packaging case has been prepunched;
- imprinting of the pretreated standardized sheet with the printed image configured in the computer by means of a printer;
- separation of the layout from the prepunched sheet;
- folding the finished packaging case together; and
- gluing of at least one flat button disk (1), according to claim 1, to the page (6,24') opposing the recess (4) in at least one side (6', 15).

11. Method according to claim 8, **characterized in that**
- the folded packaging case (layout) is prepunched on a sheet having a standardized size, and imprinting with a computer-controlled printer; and
- at least one side (6, 24, 24') of the packaging case has a prefarably round recess (4) through which the flat button disk (1), according to claim 1, is projecting.

12. Method according to claim 8, **characterized in that** the prepunched, standardized sheet has an adhesive layer on.

13. Method according to claim 12, **characterized in that** the side edges (8, 8') in the folded condition, are fitted into a prepunched slot (22, 22').

14. Method according to any of claim 8 to 13, **characterized in that** the side edges (11, 11')are folded on the folding edges (5') and solidly glued to the sections (6, 6'), respectivly, as an edges reinforcement.

15. Method according to any of claim 8 to 13, **characterized in that** at least one folding edge (5) is interrupted in the center by a recess (26).

16. Method according to any of claim 8 to 13, **characterized in that** the layout of the packaging case has three sections (13, 14, 15), of which the two outer sections (13, 15) each have a recess (4, 4').

17. Method according to any of claim 8 to 13, **characterized in that** the centre section (15) has a button disk (1, 1'), according to claim 1, on both sides.

18. Method according to any of claim 8 to 13, **characterized in that** the prepunched layout shows five sections to which on one side and/or both sides a positioning securing device (1) can be applied.

## Revendications

1. Axe de rotation auto-collant composé de plusieurs couches, dont une première couche (12) composée de mousse synthétique à cellules fermées; le diamètre de l'axe rotatif se situe entre 15,1 mm et 15,3 mm et la hauteur de cette première couche entre 1,5 mm et 3,5 mm. Destiné à la fixation amovible de supports d'information (3) en forme de disque avec une percée centrale (7) sur les surfaces planes, le diamètre de l'axe de rotation (DI) allant dans la percée centrale (7); **caractérisé par le fait que**
- la première couche (12) est composée d'un caoutchouc mousse et;
- une seule surface (17) de la première couche (12) est enduite d'une colle détachable (13).

2. Axe de rotation selon la revendication 1, **caractérisé par le fait qu'**il présente une forme polygonale quelconque.

3. Axe de rotation selon la revendication 1 ou 2, **caractérisé par le fait qu'**il est rond ou triangulaire ou carré ou hexagonal.

4. Axe de rotation selon la revendication 1, **caractérisé par le fait qu'**il est composé au minimum de deux couches, une couche étant une couche collante (13) et l'autre couche (12) étant composée d'un matériau souple.

5. Axe de rotation selon la revendication 1 ou 4, **caractérisé par le fait que** la couche collante (13) est répartie sous forme continue sur la totalité de la surface prévue à cet effet (17) ou est répartie sous forme discontinue sur toute la surface (17).

6. Axe de rotation selon la revendication 4, **caractérisé par le fait que** le matériau souple (12) est en carton.

7. Axe de rotation selon la revendication 1 ou 2, **caractérisé par le fait que** la mesure additionnelle du diamètre (D1) du cercle à recouvrir (2) dépend du matériau.

8. Procédé pour la fabrication de différents sacs d'emballage individuels pour des supports d'information en forme de disque avec un axe de rotation (1) **caractérisé par le fait que** la surface de développement du sac d'emballage découpée au préalable sur une feuille de dimension normalisée est imprimée de manière individuelle sur une imprimante assistée par ordinateur et qu'au minimum un axe de rotation (1) selon la spécification 1 est placé sur la plaque de base (6, 15) du sac d'emballage qui est située avec un creux (4, 4') de la partie pliée opposée (6', 24, 24') du sac d'emballage sous forme serrée au niveau de la prise.

9. Procédé selon la revendication 8, **caractérisé par** les étapes de procédé suivantes:
- configuration de l'ensemble de l'image imprimée sur l'écran de l'ordinateur;
- insertion d'une feuille définie traitée au préalable de dimension normalisée sur laquelle le développement du sac d'emballage est découpé au préalable;
- impression de la feuille normalisée traitée au préalable avec l'image d'impression configurée sur ordinateur par le biais d'une imprimante;
- enlèvement du développement de la feuille découpée au préalable et
- pli du sac d'emballage fini.

10. Procédé selon la revendication 8, **caractérisé par** les étapes de procédé suivantes:
- configuration de toute l'image d'impression sur l'écran d'un ordinateur;
- insertion d'une feuille définie traitée au préalable d'une dimension normalisée sur laquelle le développement du sac d'emballage est prédécoupé avec au minimum un creux (4) sur au minimum un côté (6') du sac d'emballage;
- impression de la feuille normalisée traitée au préalable avec l'image d'impression configurée sur ordinateur par le biais d'une imprimante;
- enlèvement du développement de la feuille découpée au préalable;
- pli du sac d'emballage fini et
- collage au minimum d'un axe de rotation plat (1) selon la spécification 1 sur un côté (6', 15) opposé à un creux (4) sur au minimum un côté (6, 24).

11. Procédé selon la revendication 8, **caractérisé par le fait que**
- le sac d'emballage non plié (développement) est prédécoupé sur une feuille de dimension normalisée et sera imprimé avec une imprimante assistée par ordinateur et
- au minimum un côté (6, 24, 24') du sac d'emballage est pourvu d'un creux de préférence rond (4) par lequel l'axe de rotation plat (1) selon la spécification 1 est conduit.

12. Procédé selon la revendication 8, **caractérisé par le fait que** la feuille prédécoupée normalisée présente une surface collante sur les bords latéraux (8, 8').

13. Procédé selon la revendication 12, **caractérisé par le fait que** les bords latéraux (8, 8', 11) sont emboîtés à l'état plié dans une vente prédécoupée (22, 22').

14. Procédé selon une des revendications 8 à 13, **caractérisé par le fait que** les bords latéraux (11, 11') sont pliés au niveau des arêtes de pliage (5') et sont collés dans les sections (6, 6') ou (24, 24') en tant que renforts de bordure.

15. Procédé selon les revendications 8 à 14, **caractérisé par le fait qu'**au minimum une arrête de pliage (5) est interrompue au centre par un creux (26).

16. Procédé selon les revendications 8 à 15, **caractérisé par le fait que** le développement du sac d'emballage présente trois sections (24, 24', 15), les deux sections externes (24, 24') présentant un creux (4, 4').

17. Procédé selon les revendications 8 à 16, **caractérisé par le fait que** la section centrale (15) présente un axe de rotation (1, 1') selon spécification 1 sur les deux côtés.

18. Procédé selon les revendications 8 à 17, **caractérisé par le fait que** le développement prédécoupé présente cinq sections dont un et/ou les deux côtés est/sont pourvu(s) d'un dispositif de sécurité de position (1).
